# EUROPEAN PATENT APPLICATION

(11) **EP 2 866 178 A1**
(43) Date of publication of application: **29.04.2015**
(21) Application number: 13810186.0
(22) Date of filing: 18.01.2013
(51) Int. Cl.: G06Q 10/10

(54) **INFORMATION MANAGEMENT METHOD AND TERMINAL**

(30) Priority: 25.06.2012 CN 201210212040
(71) Applicant: Huawei Technologies Co., Ltd., Longgang District Shenzhen, Guangdong 518129 (CN)
(72) Inventor: WANG, Shouyu, Shenzhen Guangdong 518129 (CN)
(74) Representative: Pfenning, Meinig & Partner GbR
(86) International application number: PCT/CN2013/070737
(87) International publication number: WO 2014/000442

(57) **Abstract**

The present invention provides an information management method and terminal, and relates to the field of communications technologies, which resolves a problem that, if there are many to-do events on a current day, too much display space is occupied when the terminal displays all the to-do events on the current day, and a user cannot view the to-do events in an easy way. Specific steps may include: receiving information about a to-do event; receiving first display information and second display information; and displaying the information about the to-do event according to the first display information and the second display information. The method is applicable to a to-do event reminder.

## Description

This application claims priority to Chinese Patent Application No. 201210212040.3, filed with the Chinese Patent Office on June 25, 2012 and entitled "INFORMATION MANAGEMENT METHOD AND TERMINAL", which is incorporated herein by reference in its entirety.

### TECHNICAL FIELD

The present invention relates to the field of communications technologies, and in particular, to an information management method and terminal.

### BACKGROUND

As work becomes increasingly heavy, many people often need to attend various conferences, and therefore often receive various conference notices, conference reminders, and the like.

In the prior art, in order not to miss conferences and various to-do events, people often use mobile phones or computers to record to-do events by means of agenda.

For example, a user installs corresponding software on a terminal, and when the user needs to record a to-do event by using the terminal, the user opens a calendar on the terminal, selects a date when the to-do event is to be handled, and enters information such as subject, time, and site of the to-do event. The terminal displays the to-do event on a current day or on a predetermined date in a display interface for the user to query. The terminal may be a mobile phone, a computer, and the like.

During a process of implementing the foregoing information management, the inventor finds that the prior art has at least the following problem: If there are many to-do events on a current day, too much display space is occupied when the terminal displays all the to-do events on the current day, and a user cannot view the to-do events in an easy way.

### SUMMARY

Embodiments of the present invention provide an information management method and terminal, which resolve a problem that, if there are many to-do events on a current day, too much display space is occupied when the terminal displays all the to-do events on the current day, and a user cannot view the to-do events in an easy way.

To achieve the foregoing objective, the embodiments of the present invention adopt the following technical solutions:

According to one aspect, an information management method is provided, including:
receiving information about a to-do event;
receiving first display information and second display information, where the first display information is used for instructing a terminal to display the information about the to-do event before receiving the second display information, and the second display information is used for instructing the terminal to stop displaying the information about the to-do event; and
displaying the information about the to-do event according to the first display information and the second display information.

According to another aspect, a terminal is provided, including:
a receiver, configured to: receive information about a to-do event; and receive first display information and second display information, where the first display information is used for instructing a terminal to display the information about the to-do event before receiving the second display information, and the second display information is used for instructing the terminal to stop displaying the information about the to-do event; and
a processor, configured to display the information about the to-do event according to the first display information and the second display information received by the receiver.

With respect to an information management method and terminal provided by the embodiments of the present invention, by adopting the foregoing solutions, after receiving first display information, the terminal displays, according to the first display information, information about a to-do event to be displayed, and meanwhile receives second display information, and stops displaying, according to the second display information, the information about the to-do event that is not allowed for display. In other words, the terminal displays corresponding information about a to-do event according to requirements, and does not display information about a to-do event that does not need to be displayed. In this way, display space of the terminal is saved, and a user can view the information in an easy way.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of an information management method according to an embodiment
FIG. 2 is a flowchart of another information management method according to an embodiment;
FIG. 3 illustrates graphs and a clock graph displayed in a display interface after reception of information about a to-do event;
FIG. 4 illustrates display of corresponding information about a to-do event on a terminal when the mouse pointer hovers over a graph; and
FIG. 5 is a schematic structural diagram of a terminal according to an embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

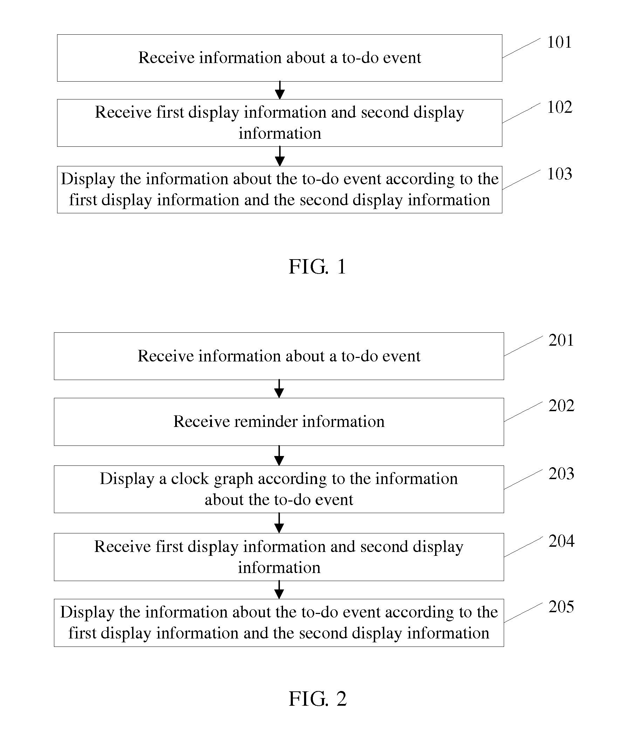

An embodiment provides an information management method. As shown in FIG. 1, the method includes the following steps:

101. Receive information about a to-do event.

People use reminder software on a terminal to record a to-do event, and query the to-do event, or the reminder software displays the to-do event to be displayed in an interface of the terminal according to requirements.

This embodiment sets no limitation on a type of the terminal. The type of the terminal may be set according to actual requirements, for example, a mobile phone, a computer, and the like, and details are not repeatedly described herein.

102. Receive first display information and second display information.

In order not to occupy too much display space of the terminal, the terminal displays corresponding information about a to-do event according to a user's requirements.

Specifically, the terminal receives the first display information and the second display information, where the first display information is used for instructing the terminal to display the information about the to-do event before receiving the second display information, and the second display information is used for instructing the terminal to stop displaying the information about the to-do event.

103. Display the information about the to-do event according to the first display information and the second display information.

By adopting the foregoing solution, after receiving first display information, a terminal displays, according to the first display information, information about a to-do event to be displayed, and meanwhile receives second display information, and stops displaying, according to the second display information, the information about the to-do event that is not allowed for display. In other words, the terminal displays corresponding information about a to-do event according to requirements, and does not display information about a to-do event that does not need to be displayed. In this way, display space of the terminal is saved, and a user can view the information in an easy way.

As an improvement of the foregoing embodiment, this embodiment provides another information management method, which is a further extension of the method shown in FIG. 1. As shown in FIG. 2, the method includes the following steps:

201. Receive information about a to-do event.

People use reminder software on a terminal to record a to-do event, and query the to-do event, or the reminder software displays the to-do event to be displayed in an interface of the terminal according to requirements.

To enable a user to view the to-do event by using the terminal, the terminal first receives the information about the to-do event, where the information about the to-do event may include, but is not limited to, subject information, time information, and the like of the to-do event.

This embodiment sets no limitation on a type of the terminal. The type of the terminal may be set according to actual requirements, for example, a mobile phone, a computer, and the like, and details are not repeatedly described herein.

Further and optionally, the information about the to-do event may be generated according to a to-do event email received by the terminal.

Specifically, the terminal first receives the to-do event email, where the to-do event email may include at least one of subject information, time information, and address information of the to-do event; and subsequently, the terminal generates the information about the to-do event according to the to-do event email, where the information about the to-do event may include, but is not limited to at least one of the subject information, the time information, and the address information.

As an implementation manner of this embodiment, the terminal may be bound to at least one mailbox; one mailbox may also be bound to at least one terminal; a conference convener sends a conference invitation email to mailboxes of conference attendees, where the conference invitation email may include time information, address information, subject information, and the like of the conference; and the terminal generates information about a to-do event according to the conference invitation email received in the bound mailbox.

Further, the conference invitation email sent by the conference convener may be an email in a specified format, and the email may carry special identifier information. After receiving the email that carries the special identifier information, the terminal acquires the time information, the address information, the subject information, and the like of the conference from the email, and generates the information about the to-do event according to the acquired information.

This embodiment sets no limitation on a method for generating the information about the to-do event according to the email, and content of the email. The method and the content of the email may be set according to actual requirements, and details are not repeatedly described herein.

Further and optionally, the user may manually enter the information about the to-do event into the terminal.

This embodiment sets no limitation on a method for receiving the information about the to-do event by the terminal, and a type of the to-do event. The method and the type of the to-do event may be set according to actual requirements, and details are not repeatedly described herein.

202. Receive reminder information.

As an implementation manner of this embodiment, if the terminal is in a power-off state, the terminal can neither receive the email in a timely manner, and nor display the corresponding information about the to-do event according to the email. Therefore, if a server detects that the terminal is in the power-off state, the server not only sends a to-do event email to the terminal, but also sends the same email to a terminal that is bound to the terminal in the power-off state, so that the user may view the to-do event by using another terminal, thereby reminding the user in a timely manner.

Specifically, after receiving the reminder information, the terminal generates the information about the to-do event according to the email in the reminder information.

This embodiment sets no limitation on a method for detecting by the server that the terminal is powered off, which is a technology well known by a person skilled in the art, and is not repeatedly described herein.

203. Display a clock graph according to the information about the to-do event, where the number of graphs is equal to the number of to-do events, and the to-do event is displayed at a position of a corresponding time on the clock graph according to the time information of the to-do event.

To enable the user to visually view information about to-do events within a predetermined time period, the terminal displays clock graphs according to the information about the to-do events. The number of graphs is equal to the number of to-do events so that the user can learn the number of to-do events according to the number of graphs.

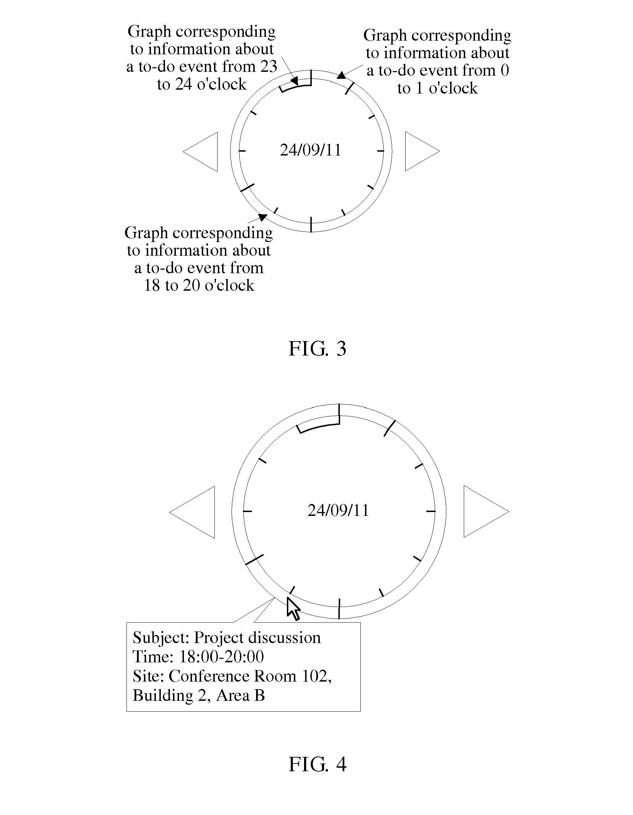

As an implementation manner of this embodiment, as shown in FIG. 3, a graph displayed in a display interface after a terminal receives information about a to-do event is shown. Firstly, the terminal displays a clock graph in the display interface, where the date of a current day is displayed at the center of the clock graph. If the to-do event exists on the date, the graph corresponding to the information about the to-do event is distributed on an edge of the graph clock.

Specifically, the graphs are separately displayed at positions of corresponding times on the clock graph according to respective time information corresponding to the to-do events. A graph on the inner ring at the edge of the clock graph indicates information about a to-do event that needs to be processed from 0 to 12 o'clock; and a graph on the outer ring at the edge of the clock graph indicates information about a to-do event that needs to be processed from 12 to 24 o'clock.

Further and optionally, adjacent graphs may be differentiated by using different colors.

This embodiment sets no limitation on a shape and color of the graphs and the clock graph. The shape and color may be set according to actual requirements, and details are not repeatedly described herein.

204. Receive first display information and second display information.

In order not to occupy too much display space of the terminal, the terminal displays corresponding information about a to-do event according to a user's requirements.

Specifically, the terminal receives the first display information and the second display information, where the first display information is used for instructing the terminal to display the information about the to-do event before receiving the second display information, and the second display information is used for instructing the terminal to stop displaying the information about the to-do event.

As an implementation manner of this embodiment, the first display information may include information about a to-do event whose time information falls within a predetermined time range, and the second display information may include information about a to-do event whose time information does not fall within the predetermined time range. The predetermined time range may be from 0 to 6 o'clock, from 6 to 12 o'clock, or the like.

After receiving the first display information, the terminal may display the to-do event that is included in the first display information and whose time information falls within the predetermined time range; after receiving the second display information, the terminal stops displaying the to-do event that is included in the second display information and whose time information does not fall within the predetermined time range.

This embodiment sets no limitation on a method for displaying the to-do event according to the first display information and the second display information. The method may be set according to actual requirements, and details are not repeatedly described herein.

As an implementation manner of this embodiment, if the terminal is a computer, when the mouse pointer hovers over a graph at the edge of the clock graph, the first display information may include information about a to-do event corresponding to the graph, and the second display information may include information about a to-do event corresponding to a graph over which the mouse pointer does not hover.

This embodiment sets no limitation on the information about the to-do event and a value of the predetermined time included in the first display information and the second display information. The information and value may be set according to actual requirements, and details are not repeatedly described herein.

205. Display the information about the to-do event according to the first display information and the second display information.

Further and optionally, the terminal may display, by using at least one manner of a voice broadcasting manner and a text display manner, the information about the to-do event according to the first display information and the second display information.

This embodiment sets no limitation on a manner for displaying the information about the to-do event by the terminal. The manner may be set according to actual requirements, and details are not repeatedly described herein.

As an implementation manner of this embodiment, if the terminal is a computer, when the mouse pointer hovers over a graph, the terminal is instructed to display information about a to-do event corresponding to the graph, and when the mouse pointer moves away from the graph, the terminal is instructed not to display the information about the to-do event corresponding to the graph.

For example, as shown in FIG. 4, the to-do event corresponding to the graph in the lower left part of the clock graph is a conference event; when the mouse pointer hovers over the graph, related information about the conference event is displayed on the graph, where the information may include: information about a time at which the conference is held, information about subjects of the conference, information about an address of the conference, and the like; and when the mouse pointer moves away from the graph, displaying the related information about the conference event is stopped. The time information of the conference event is from 18 to 20 o'clock. Therefore, the graph corresponding to the conference information is at a position from 6 to 8 o'clock on the outer ring of the clock graph, indicating that the conference is to be held from 18 to 20 o'clock.

As an implementation manner of this embodiment, two triangle graphs may further be included on two sides of the clock graph; when the triangle graph on the right side is clicked by using a mouse, a date at the center of the clock graph on the terminal changes into a date of the next day, or changes into a next date that includes a to-do event; when the triangle graph on the left side is clicked by using the mouse, the date at the center of the clock graph on the terminal changes into a date of the previous day, or changes into a previous date that includes a to-do event.

This embodiment sets no limitation on a specific shape and structure of the clock graph. The specific shape and structure may be set according to actual requirements, and details are not repeatedly described herein.

Further and optionally, when a time span from the time information included in the information about the to-do event to the current time is smaller than a predetermined value, the terminal displays the to-do event, for example, the information about the to-do event is broadcast by means of voice, and the information about the to-do event is displayed by means of text, so that the user does not miss the to-do event.

For example, if the current time is 15 o'clock, and the terminal records that the user needs to attend a conference at 15:30, the terminal broadcasts the to-do event by means of voice or displays the to-do event by means of text at the time of 15:10, 20 minutes before the conference starts.

This embodiment sets no limitation on the specific predetermined value. The value may be set according to actual requirements, for example, may be 20 minutes, 30 minutes, or the like, and details are not repeatedly described herein.

By adopting the foregoing solution, after receiving first display information, a terminal displays, according to the first display information, information about a to-do event to be displayed, and meanwhile receives second display information, and stops displaying, according to the second display information, the information about the to-do event that is not allowed for display. In other words, the terminal displays corresponding information about a to-do event according to requirements, and does not display information about a to-do event that does not need to be displayed. In this way, display space of the terminal is saved, and a user can view the information in an easy way.

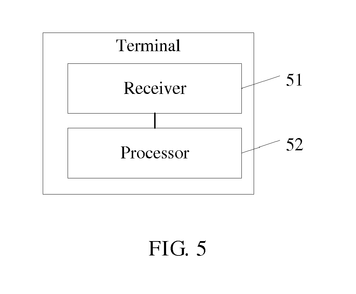

An embodiment provides a terminal. As shown in FIG. 5, the terminal includes:
a receiver 51, configured to: receive information about a to-do event; and receive first display information and second display information, where the first display information is used for instructing a terminal to display the information about the to-do event before receiving the second display information, and the second display information is used for instructing the terminal to stop displaying the information about the to-do event; and
a processor 52, configured to display the information about the to-do event according to the first display information and the second display information received by the receiver.

By adopting the foregoing solution, after a receiver receives first display information, a processor displays, according to the first display information, information about a to-do event to be displayed, and meanwhile the receiver further receives second display information, and the processor stops displaying, according to the second display information, the information about the to-do event that is not allowed for display. In other words, the processor displays corresponding information about a to-do event according to requirements, and does not display information about a to-do event that does not need to be displayed. In this way, display space of the terminal is saved, and a user can view the information in an easy way.

As an improvement of an embodiment, this embodiment provides another terminal, which is a further extension of the terminal shown in FIG. 5 and includes:
a receiver 51, configured to: receive information about a to-do event; and receive first display information and second display information, where the first display information is used for instructing a terminal to display the information about the to-do event before receiving the second display information, and the second display information is used for instructing the terminal to stop displaying the information about the to-do event; and
a processor 52, configured to display the information about the to-do event according to the first display information and the second display information received by the receiver.

Further, the receiver is further configured to receive a to-do event email, where the to-do event email includes at least one of subject information, time information, and address information of the to-do event.

Further, the processor is further configured to generate the information about the to-do event according to the to-do event email received by the receiver, where the information about the to-do event includes at least one of the subject information, the time information, and the address information.

Further, the receiver is further configured to receive reminder information, where the reminder information is sent by a server after detecting that a terminal bound to the terminal is in a power-off state, and the reminder information includes an email received after the terminal, in the power-off state, bound to the terminal is powered off.

Further, the processor is further configured to display, by using at least one manner of a voice broadcasting manner and a text display manner, the information about the to-do event according to the first display information and the second display information received by the receiver.

Further, the processor is further configured to display a clock graph according to the information about the to-do event received by the receiver, where the number of graphs is equal to the number of to-do events, and the to-do event is displayed at a position of a corresponding time on the clock graph according to the time information of the to-do event.

By adopting the foregoing solution, after a receiver receives first display information, a processor displays, according to the first display information, information about a to-do event to be displayed, and meanwhile the receiver further receives second display information, and the processor stops displaying, according to the second display information, the information about the to-do event that is not allowed for display. In other words, the processor displays corresponding information about a to-do event according to requirements, and does not display information about a to-do event that does not need to be displayed. In this way, display space of the terminal is saved, and a user can view the information in an easy way.

According to the foregoing description of the embodiments, a person skilled in the art may clearly understand that the present invention may be implemented by using software in combination with necessary common hardware, and certainly may also be implemented by using hardware. However, in most cases, the former is a preferred embodiment. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information management method, comprising:
receiving information about a to-do event;
receiving first display information and second display information, wherein the first display information is used for instructing a terminal to display the information about the to-do event before receiving the second display information, and the second display information is used for instructing the terminal to stop displaying the information about the to-do event; and
displaying the information about the to-do event according to the first display information and the second display information.

2. The information management method according to claim 1, wherein the receiving information about a to-do event comprises:
receiving a to-do event email, wherein the to-do event email comprises at least one of subject information, time information, and address information of the to-do event;
generating the information about the to-do event according to the to-do event email, wherein the information about the to-do event comprises at least one of the subject information, the time information, and the address information.

3. The information management method according to claim 2, wherein before the generating the information about the to-do event according to the to-do event email, the method further comprises:
receiving reminder information, wherein the reminder information is sent by a server after detecting that a second terminal bound to the terminal is in a power-off state, and the reminder information comprises an email received after the second terminal, in the power-off state, bound to the terminal is powered off.

4. The information management method according to any one of claims 1 to 3, wherein the displaying the information about the to-do event according to the first display information and the second display information comprises: displaying, by using at least one manner of a voice broadcasting manner and a text display manner, the information about the to-do event according to the first display information and the second display information.

5. The information management method according to any one of claims 1 to 4, wherein after the receiving information about a to-do event, the method further comprises:
displaying a clock graph according to the information about the to-do event, wherein the number of graphs is equal to the number of to-do events, and the to-do event is displayed at a position of a corresponding time on the clock graph according to the time information of the to-do event.

6. A terminal, comprising:
a receiver, configured to: receive information about a to-do event, receive first display information and second display information, wherein the first display information is used for instructing to display the information about the to-do event before receiving the second display information, and the second display information is used for instructing the terminal to stop displaying the information about the to-do event; and
a processor, configured to display the information about the to-do event according to the first display information and the second display information received by the receiver.

7. The terminal according to claim 6, wherein the receiver is further configured to receive a to-do event email, wherein the to-do event email comprises at least one of subject information, time information, and address information of the to-do event; and
the processor is further configured to generate the information about the to-do event according to the to-do event email received by the receiver, wherein the information about the to-do event comprises at least one of the subject information, the time information, and the address information.

8. The terminal according to claim 7, wherein the receiver is further configured to receive reminder information, wherein the reminder information is sent by a server after detecting that a second terminal is bounded to the terminal is in a power-off state, and the reminder information comprises an email received after the second terminal, in the power-off state, bound to the terminal is powered off.

9. The terminal according to any one of claims 6 to 8, wherein the processor is further configured to display, by using at least one manner of a voice broadcasting manner and a text display manner, the information about the to-do event according to the first display information and the second display information received by the receiver.

10. The terminal according to any one of claims 6 to 9, wherein the processor is further configured to display a clock graph according to the information about the to-do event received by the receiver, wherein the number of graphs is equal to the number of to-do events, and the to-do event is displayed at a position of a corresponding time on the clock graph according to the time information of the to-do event.
